# EUROPÄISCHE PATENTSCHRIFT

(11) **EP 3 287 354 B1**
(45) Veröffentlichungstag und Bekanntmachung des Hinweises auf die Patenterteilung: **29.07.2020**
(21) Anmeldenummer: 16185531.7
(22) Anmeldetag: 24.08.2016
(51) Int. Cl.: B62K 25/28, B62K 19/34, B62J 99/00

(54) **GEFEDERTER ZWEIRADRAHMEN**
SPRING-LOADED BICYCLE FRAME
CADRE DE BICYCLETTE À RESSORT

(43) Veröffentlichungstag der Anmeldung: 28.02.2018
(73) Patentinhaber: Klieber, Jochen, 83342 Tacherting (DE)
(72) Erfinder: Klieber, Jochen, 83342 Tacherting (DE)
(74) Vertreter: Wachenhausen & Kollegen Patentanwälte GbR

(56) Entgegenhaltungen:
- EP-A1- 2 406 122
- EP-A2- 2 546 132
- US-A1- 2003 205 882
- US-A1- 2005 046 142
- US-A1- 2009 261 556
- US-B1- 8 770 608

## Beschreibung

### GEBIET DER ERFINDUNG:

Die Erfindung betrifft gefederte Zweiradrahmen, die Integration von Laufrädern in gefederte Zweiradrahmen, die Führung von Leitungen an gefederten Zweiradrahmen, sowie ein Fahrrad mit einem gefederten Zweiradrahmen.

### TECHNOLOGISCHER HINTERGRUND:

Zur Steigerung des Fahrkomforts, aber auch zur Erhöhung der Fahrsicherheit werden Fahrradrähmen neben Federgabeln auch mit gefederten und gedämpften Hinterbauten versehen. Mittels unterschiedlicher Rahmenkonstruktionen werden Schläge, die von Unebenheiten auf dem Fahrweg herrühren durch eine weitegehend unabhängige Dynamik des Hinterbaus vom Vorderbau kompensiert.

Die Federung des Hinterbaus bringt neben dem Komfortgewinn auch zahlreiche Probleme mit sich. Durch die Trennung des Hinterbaus vom Rahmen verliert das gesamte Fahrrad grundsätzlich an Steifigkeit. Hinzu kommt, dass vollgefederte Rähmen im Vergleich zu ungefederten Rähmen oft ein höheres Gewicht aufweisen und einen höheren Wartungsaufwand zum Beispiel an dem hinteren Dämpfungselement und dessen Ansteuerung benötigen. Zudem kann die Bewegung des Hinterbaus beim Ein- und Ausfedern Einflüsse auf den Antrieb des Fahrrads haben. Die Hersteller von Federungselementen versuchen diesen Problemen durch eine Reihe von konstruktiven Maßnahmen zu begegnen.

Bei gefederten Zweiradrahmen befindet sich zwischen den beiden Kettenstreben ein sogenanntes Jochbein, das eine Querverbindung zur Stabilisierung des vollgefederten Rahmens darstellt. In Fachkreisen wird dieses Jochbein auch als Yoke bezeichnet. Weiterhin ist es in letzter Zeit bedingt durch mehrere technische Vorteile vermehrt populär geworden, größere Laufräder, insbesondere in Mountainbikes, zu verwenden. Dabei kommen insbesondere 27,5 Zoll und 29 Zoll Laufräder zum Einsatz. Ebenso werden die verwendeten Fahrradreifen aus unterschiedlichen Gründen breiter.

Die Patentanmeldung US 2009/0261556 A1 beschreibt ein Fahrrad-Hinterradfederungssystem nach den Merkmalen des Oberbegriffs des Anspruchs 1, und umfasst einen Hauptrahmen und ein Hinterradfederungssystem. Der Hauptrahmen umfasst im Allgemeinen ein Sitzrohr, ein Unterrohr, ein Oberrohr und ein Steuerrohr. Das Hinterradfederungssystem umfasst ein erstes Verbindungselement, eine Hinterradschwinge und ein zweites Verbindungselement. Das erste Verbindungselement ist kürzer als 15 mm von seiner schwenkbaren Verbindung zum Hauptrahmen und seiner schwenkbaren Verbindung zur Hinterradschwinge und ändert seine Drehrichtung, da das Hinterrad im Wesentlichen vertikal ausgelenkt wird. Das Hinterrad-Federungssystem ermöglicht eine bevorzugte Bewegungsbahn der Hinterradachse, die erhöhte Raten der Kettenstrebenverlängerung im ersten Teil des vertikalen Hinterradwegs mit einem schnellen Übergang zur reduzierten Kettenstrebenverlängerung im letzten Teil des vertikalen Hinterradwegs bereitstellt, sodass die Gesamtänderung der Kettenstrebenlänge relativ zu der Länge des vertikalen Hinterradwegs klein ist.

Die Patentanmeldung US 2005/0046142 A1 betrifft eine Fahrradrahmenanordnung enthaltend ein Unterrohr und eine monolithische Unterrohraufnahme, wobei die Unterrohraufnahme vorzugsweise eine Tasche bildet, die angepasst ist, um einen Endabschnitt des Unterrohres aufzunehmen, so dass die Rohraufnahme wenigstens einen Teil einer Seitenfläche eines Endabschnittes des Unterrohres überdeckt.

In einer Ausführungsform verbindet eine Schweißnaht die Rohraufnahme und das Unterrohr. Vorzugsweise bildet die Unterrohraufnahme eine Öffnung, die angepasst ist, um eine Tretkurbelgamitur aufzunehmen und an dem Fahrradrahmen zu befestigen. Weiterhin umfasst die Unterrohraufnahme einen Schwenkbefestigungsabschnitt, der angepasst ist, um einen Hilfsrahmen der Rahmenanordnung oder einen hinteren Stoßdämpfer oder ein Federbein drehbar aufzunehmen.

Die Patentanmeldung EP 2 406 122 A1 betrifft die Führung von Leitungen an einem Zweiradrahmen. Dabei erfolgt die Führung mittels einer Führungsvorrichtung an einem Rahmenelement, an dem ein weiteres Rahmenelement beweglich gelagert ist, derart, dass die Leitung im Wesentlichen die Drehachse der Lagerung schneidet.

### ZUSAMMENFASSUNG DER ERFINDUNG

Es kann als eine Aufgabe der Erfindung angesehen werden, eine verbesserte Integration eines Hinterrades in einen vollgefederten Fahrradrahmen zu ermöglichen. Es sind ein gefederter Zweiradrahmen und ein Fahrrad gemäß den Merkmalen der unabhängigen Ansprüche angegeben. Weiterbildungen der Erfindung ergeben sich aus den Unteransprüchen und aus der folgenden Beschreibung.

Die beschriebenen Ausführungsbeispiele betreffen gleichermaßen den gefederten Zweiradrahmen und das Fahrrad.

### Definitionen:

Im Kontext der vorliegenden Erfindung wird der Begriff "Leitung" beispielsweise für einen Bowdenzug mit entsprechender Außenhülle, für eine hydraulische Leitung, eine pneumatische oder eine elektrische Leitung verwendet.

Weiterhin ist der Begriff "Abstand der Oberfläche der Leitung zur Drehachse" derart zu verstehen, dass keine parallele Anordnung der Leitung zur Drehachse erfolgt. Vielmehr schneidet die Leitung die Drehachse entweder in einem Schnittpunkt, was einem Abstand der beiden von 0 mm entspricht. Oder aber die Leitung und die Drehachse liegen windschief bzw. schräg zueinander im Raum, in welchem Fall der Abstand die kürzeste Entfernung zwischen der Oberfläche der Leitung und der Drehachse ist.

Weiterhin definiert der Begriff "Drehachse" sowohl eine gegenständliche, materielle Achse, es kann aber auch eine immaterielle, abstrakte räumliche Drehachse sein.

Gemäß einem Ausführungsbeispiel der Erfindung ist ein gefederter Zweiradrahmen mit einem Vorderbau und einer Schwinge angegeben. Der Vorderbau weist eine Schwingenlageraufnahme auf und die Schwinge weist eine erste und eine zweite Kettenstrebe auf. Die erste und zweite Kettenstrebe ist jeweils mittels eines Lagers an der Schwingenlageraufnahme des Vorderbaus beweglich befestigt. Weiterhin weist die Schwingenlageraufnahme eine Aussparung oder Ausnehmung oder Vertiefung zur Bereitstellung eines Freiraums für das Hinterrad des gefederten Zweiradrahmens auf. Zwischen der ersten und der zweiten Kettenstrebe ist ein Jochbein der Schwinge angeordnet. Weiterhin verläuft das Jochbein von der ersten zur zweiten Kettenstrebe unterhalb der Schwingenlageraufnahme.

Gemäß der vorliegenden Erfindung verläuft das Jochbein nicht mehr zwischen dem Hinterrad und dem Schwingenlager, sondern unterhalb des Schwingenlagers. Beispielsweise kann dies kombiniert werden mit tiefgezogenen Kettenstrebenköpfen, die sich von der Drehachse des Lagers nach unten erstrecken. Dies wird im Kontext weiter ausgebildeter Ausführungsbeispiele näher erläutert werden. Weiterhin kann dieses Ausführungsbeispiel der Erfindung mit einer Leitungsführung durch das Unterrohr und/oder das Sitzrohr erfolgen, wobei die geführte Leitung durch den Drehpunkt bzw. die Drehachse des Schwingenlagers verläuft. Auch hierzu werden weitere Details und Vorteile im Kontext spezifischer Ausführungsbeispiele erläutert werden.

Die Aussparung der Schwingenlageraufnahme kann als Ausschnitt oder Ausnehmung verstanden werden. Insgesamt schafft die Aussparung der Schwingenlageraufnahme einen Freiraum für das Hinterrad und erlaubt einen zusätzlichen Reifenfreigang, ohne dass die Kettenstreben bei dem Einsatz größerer Durchmesser des Hinterrades verlängert werden müssen. Dies hat den Vorteil, dass der sonst auftretende Nachteil bei einer Verlängerung der Kettenstreben, nämlich insbesondere, dass das Rad sehr hinterbaulastig hinsichtlich seiner Fahreigenschaften wird, durch die vorliegende Erfindung vermieden wird.

Mit anderen Worten vermeidet die vorliegende Erfindung also gerade den typischen Weg im Stand der Technik, die Kettenstreben zu verlängern oder lediglich die rechte Kettenstrebe nach unten zu ziehen. Dies wird üblicherweise gemacht, um Platz für den Umwerfer und Distanz zur Kette zu erzeugen.

Im Gegensatz dazu gibt die vorliegende Erfindung an, in der Schwingenlageraufnahme des Vorderbaus eine Aussparung vorzusehen, so dass das Hinterrad des Zweirades in einen dadurch bereitgestellten Freiraum hindurchtritt. Die Kombination der Aussparung der Schwingenlageraufnahme mit der neuen Platzierung des Jochbeins unterhalb der Schwingenlageraufnahme stellt damit den vorteilhaften Freiraum für größer werdende hintere Laufräder, insbesondere an Fahrrädern, bereit. Dieser Freiraum kann ebenso als Pufferzone für Verwindungen des Hinterrades verwendet werden. Vorteilhafterweise kann in diesem Freiraum ebenso eine Reifenreinigung stattfinden, bei der Steine oder Dreck sich vom Hinterrad lösen.

Gemäß einem weiteren Ausführungsbeispiel der Erfindung weist die erste Kettenstrebe einen ersten Kettenstrebenkopf und die zweite Kettenstrebe einen zweiten Kettenstrebenkopf auf, an welchen die Schwinge an der Schwingenlageraufnahme befestigt ist. Dabei sind jeweils der erste und der zweite Kettenstrebenkopf als tiefgezogener, von der Drehachse des Lagers nach unten verlaufender Kettenstrebenkopf ausgeführt.

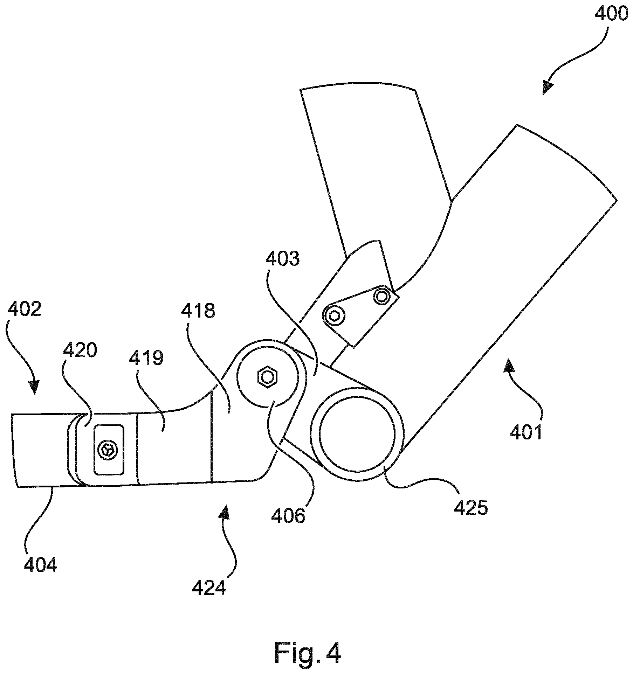

Dieses Ausführungsbeispiel kann insbesondere im Rahmen des Ausführungsbeispiels der Fig. 4 deutlich gemacht werden. Dabei bezieht sich der Begriff "nach unten verlaufender Kettenstrebenkopf" auf eine von der Drehachse des Schwingenlagers zum Boden, auf welchem sich das Zweirad befindet, verlaufende Richtung.

Insbesondere die Kombination der Aussparung in der Schwingenlageraufnahme mit dem unterhalb der Schwingenlageraufnahme verlaufenden Jochbein und den beiden tiefgezogenen Kettenstrebenköpfen, die zunächst von der Drehachse des Lagers nach unten verlauf, ermöglicht eine vollständig neue Bereitstellung von mehr Freiraum für größer werdende Hinterräder.

Insbesondere weist ein tiefgezogener, von der Drehachse des Lagers nach unten verlaufender Kettenstrebenkopf im Sinne der vorliegenden Erfindung einen vom Schwingenlager sich erstreckenden ersten Teil auf, woran sich ein zweiter gekrümmter Teil der Kettenstrebe anschließt, der dann in einen geraden Kettenstrebenverlauf mündet. Dies kann insbesondere deutlich in der Seitenansicht der Fig. 4 gesehen werden.

Gemäß einem weiteren Ausführungsbeispiel der Erfindung ist die Schwingenlageraufnahme als unbeweglicher, einstückiger, nicht verschwenkbarer Teil eines Hauptrahmens des Zweiradrahmens ausgeführt.

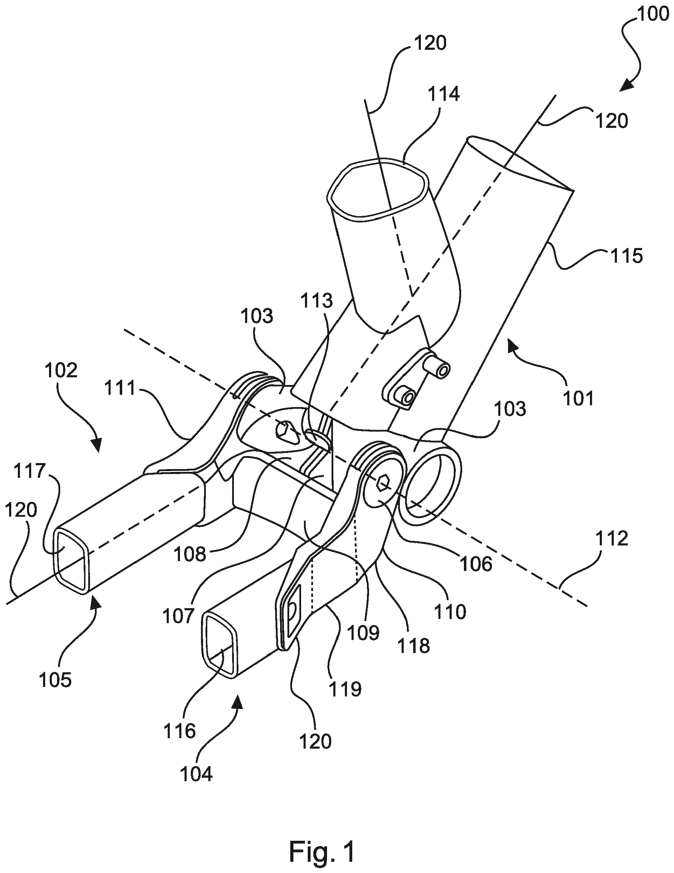

Damit ist die Schwingenlageraufnahme integraler Bestandteil des Vorderbaus des gefederten Zweiradrahmens. Dies kann beispielsweise den Ausführungsbeispielen der Fig. 1, 2 und 4 entnommen werden.

Gemäß einem weiteren Ausführungsbeispiel der Erfindung ist innerhalb der Aussparung der Schwingenlageraufnahme mindestens eine Öffnung zur Leitungsdurchführung angeordnet.

Eine solche Öffnung ist beispielsweise in den Fig. 1, 2 und 3 gezeigt. Mit diesem erfindungsgemäßen gefederten Zweiradrahmen kann erreicht werden, dass die Leitung, welche durch die Öffnung hindurchgeführt wird, im Wesentlichen die Drehachse des Lagers schneidet. Dabei kann die Leitung beispielsweise senkrecht zur Drehachse oder auch leicht schräg verlaufend zur Drehachse geführt werden.

Aufgrund des Durchgangs der Leitung durch die Drehachse oder durch einen leicht beabstandeten zylindrischen Bereich mit Radius von 10 mm um die Drehachse herum kann verhindert werden, dass bei einer Relativbewegung der Schwinge zum Vorderbau eine Längung der Leitung verursacht wird. Aufgrund dieser minimierten oder verhinderten Längung der Leitung können unerwünschte Effekte auf diejenigen Komponenten an dem Zweirad, die mit der Leitung angesteuert werden, verhindert werden. Diese Komponenten können beispielsweise Bremsen, Schaltungen, Dämpfungselemente oder Vorrichtungen zur Veränderung der Sitzhöhe sein.

Dabei kann der Abstand der Oberfläche der Leitung zur Drehachse des Lagers auch in einem Bereich zwischen beispielsweise 0 und 15 mm liegen, wenn die benutzte Rahmenkonstruktion bei einem Abstand von 15 mm noch keine merkliche Zuglängung verursacht. Ein wichtiger Aspekt dieses Ausführungsbeispiels ist dabei, dass der Abstand von der Drehachse derart gewählt wird, dass sich bei einer durchschnittlichen Bewegung der beiden Rahmenelemente gegeneinander keine Längung der Leitung ergibt, die beispielsweise ein unerwünschtes Schalten an einem hinteren Schaltwerk des Zweirads verursacht. Weiterhin können durch die erfindungsgemäße Führung der Leitung mechanischer Abrieb an dem Zweiradrahmen und an der Leitung verhindert bzw. minimiert werden.

An die Öffnung, die innerhalb der Aussparung der Schwingenlageraufnahme angeordnet ist, kann sich in das Innere des Vorderbaus des gefederten Zweiradrahmens eine Führungsvorrichtung anschließen. Im Kontext der vorliegenden Erfindung soll der Begriff "Führungsvorrichtung" für ein mechanisches Bauteil verwendet werden, das zum Zwecke der räumlichen Führung der Leitung an dem Zweiradrahmen angebracht ist. Die Führungsvorrichtung kann beispielsweise ein an dem Zweiradrahmen angeschweißtes oder angelötetes Bauteil sein, durch welches die Leitung entlang eines gewünschten räumlichen Verlaufs geführt wird. Die Führungsvorrichtung kann auch ein Kanal, eine Bohrung innerhalb des Rahmenelements oder ein Führungsrohr sein, das als Einsatz in die Öffnung oder Bohrung in der Schwingenlageraufnahme eingefügt ist.

Dabei kann der gefederte Zweiradrahmen gemäß weiteren Ausführungsbeispielen zwei, drei, vier oder mehr als vier Öffnungen zur Leitungsführung aufweisen.

Gemäß einem weiteren Ausführungsbeispiel der Erfindung ist innerhalb der Aussparung der Schwingenlageraufnahme eine erste und eine zweite Öffnung zur Leitungsdurchführung angeordnet. Dabei sind die erste und zweite Öffnung durch eine Trennwand voneinander getrennt. Innerhalb des Sitzrohres oder des Unterrohres des Vorderbaus des gefederten Zweiradrahmens werden eine erste und eine zweite Leitung geführt. Dabei wird die erste Leitung durch die erste Öffnung und die zweite Leitung durch die zweite Öffnung geführt.

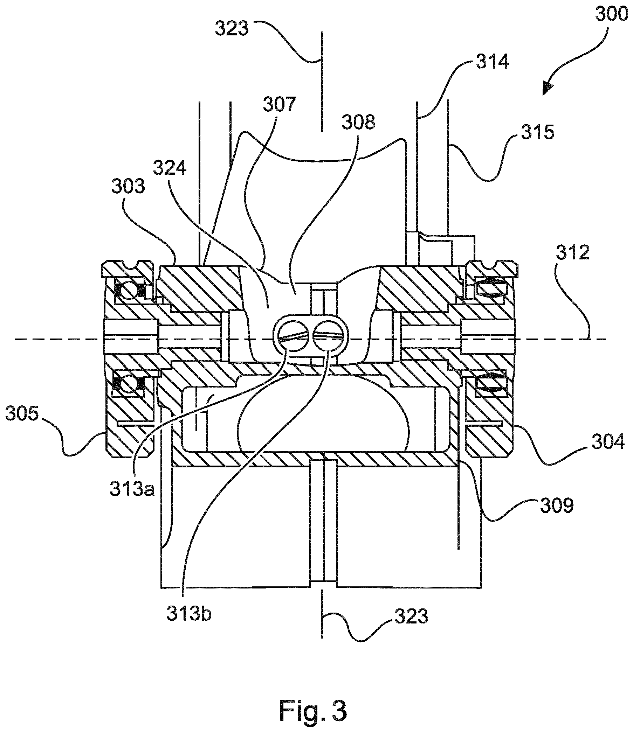

Mit anderen Worten wird in diesem Ausführungsbeispiel eine doppelläufige, definierte und einzelne Führung von Leitungen ermöglicht. Diese vorteilhafte, präzise Führung der Leitungen ermöglicht, dass keine unerwünschten Biegungen im Freibereich erfolgen und dass Kollisionen der Leitungen mit dem Reifen des Hinterrades erfolgen. Gemäß dem Ausführungsbeispiel der Fig. 3 sind zwei Öffnungen am Grund der Aussparung der Schwingenlageraufnahme gezeigt.

Alternativ könnte die Öffnung in der Aussparung auch als Langloch ausgeführt sei. Insbesondere kann die Öffnung die Form Halbkreis-Gerade-Halbkreis aufweisen.

Gemäß einem weiteren Ausführungsbeispiel der Erfindung verläuft die Führung der Leitung im Sitzrohr des Zweiradrahmens bis zu der Öffnung gerade.

Gemäß einem weiteren Ausführungsbeispiel der Erfindung ist die Öffnung am Grund oder Boden der Aussparung in der Schwingenlageraufnahme angeordnet. Weiterhin ist der Grund der Aussparung gegenüber der Drehachse des Lagers in Richtung des Vorderrades und/oder in Richtung der Tretlagerachse versetzt.

Mit anderen Worten erstreckt sich die Aussparung in der Schwingenlageraufnahme von einem dem Hinterrad zugewandten Bereich der Schwingenlageraufnahme in die Tiefe hin zu einem dem Vorderrad zugewandten Bereich der Schwingenlageraufnahme. Dies kann zum Beispiel der Fig. 1 entnommen werden.

Gemäß einem weiteren Ausführungsbeispiel der Erfindung wird durch die mindestens eine Öffnung innerhalb der Aussparung der Schwingenlageraufnahme eine Leitung geführt, welche von der Öffnung in ein Inneres der ersten oder zweiten Kettenstrebe verläuft.

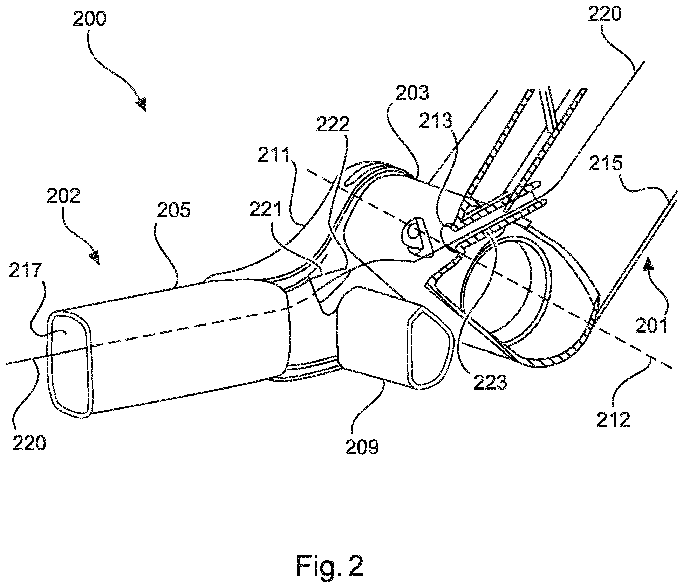

Die spezielle Rahmengeometrie der vorliegenden Erfindung mit dem tiefliegenden und unterhalb der Schwingenlageraufnahme verlaufenden Jochbein sowie der Aussparung innerhalb der Schwingenlageraufnahme ermöglicht einen optimierten Leistungsverlauf von der Öffnung in der Aussparung der Schwingenlageraufnahme hin zu einer Öffnung innerhalb der Kettenstrebe. Insbesondere kann in diesem Ausführungsbeispiel ein Leitungsverlauf realisiert werden, so dass die Leitung im geführten Zustand einen Abstand von der Drehachse des Lagers besitzt, der zwischen 0 und vorzugsweise 10 mm ist. Insbesondere ist eine Leitungsführung ermöglicht, welche durch den Drehpunkt des Lagers verläuft. Ebenso kann aufgrund der erfindungsgemäßen Aussparung in der Schwingenlageraufnahme ein früher seitlicher Verlauf der Leitung nach dem Austritt aus der Öffnung im Schwingenlagerbereich hin zu der Öffnung in der Kettenstrebe ermöglicht werden. Ein solcher Leitungsverlauf kann insbesondere der Fig. 1 entnommen werden. Das Ausführungsbeispiel der Fig. 2 zeigt ebenso einen solchen Leitungsverlauf.

Gemäß einem weiteren Ausführungsbeispiel der Erfindung verläuft oder erfolgt der Eintritt der Leitung in das Innere der ersten oder zweiten Kettenstrebe unterhalb der Drehachse des Lagers. Ebenso verläuft oder erfolgt der Eintritt der Leitung in das Innere der ersten oder zweiten Kettenstrebe oberhalb des Jochbeins.

Insbesondere können in einem weiteren Ausführungsbeispiel diese beiden Kriterien für jeweils die erste und die zweite Kettenstrebe und den jeweiligen Eintritt einer Leitung in die jeweilige Kettenstrebe erfüllt sein.

Gemäß einem weiteren Ausführungsbeispiel der Erfindung weist die erste Kettenstrebe einen ersten Kettenstrebenkopf und die zweite Kettenstrebe einen zweiten Kettenstrebenkopf auf. Die Schwinge ist über die Kettenstrebenköpfe an der Schwingenlageraufnahme befestigt. Weiterhin weisen der erste und der zweite Kettenstrebenkopf jeweils bezüglich einer Symmetrieebene des gefederten Zweiradrahmens mindestens eine erste, eine zweite und eine dritte äußere Planarfläche auf. Die erste äußere Planarfläche hat einen Abstand d1 von der Symmetrieebene, die zweite äußere Planarfläche einen Abstand d2 von der Symmetrieebene und die dritte äußere Planarfläche einen Abstand d3 von der Symmetrieebene. Weiterhin gilt in diesem Ausführungsbeispiel die Relation, dass d1 < d2 < d3.

Wie beispielsweise dem Ausführungsbeispiel der Fig. 1 entnommen werden kann, weist jeweils ein Kettenstrebenkopf drei äußere Planarflächen auf, die in Richtung von der Drehachse des Lagers zu der Hinterradaufnahme der jeweiligen Kettenstrebe von der Symmetrieebene ansteigen. Dabei ist die Symmetrieebene beispielhaft in der Fig. 3 mit dem Bezugszeichen 323 versehen. Die Symmetrieebene stellt somit beispielsweise die Mittelebene des Fahrradrahmens dar, welche den Fahrradrahmen entlang der Längsachse in einen linken und rechten Teil aufteilt. Bezüglich dieser Symmetrieebene weisen die Kettenstrebenköpfe drei bzw. mindestens drei Planarflächen an der äußeren Seite der Kettenstrebe auf, und die Distanz bzw. der Abstand der äußeren Planarfläche steigt ausgehend von der Drehachse des Lagers hin zum Ausfallende der Kettenstrebe an. Mit anderen Worten ist die erste äußere Planarfläche, welche die nächstgelegene Planarfläche zur Drehachse ist, am nächsten zur Symmetrieebene, und die zweite, weiter in Richtung des Ausfallendes liegende Planarfläche weist einen größeren Abstand zur Symmetrieebene auf, und die dritte Planarfläche weist einen noch größeren Abstand zur Symmetrieebene auf. Dies ist beispielhaft und schematisch in der Fig. 1 am rechten Kettenstrebenkopf gezeigt. Die Symmetrieebene 323 ist in Fig. 3 gezeigt und beschrieben. Eine solche Kettenstrebenkonfiguration hat sich als besonders vorteilhaft bei der Produktion des gefederten Zweiradrahmens herausgestellt.

Dieses Ausführungsbeispiel erlaubt insbesondere eine Optimierung bei der Verwendung von zwei Kettenblättern. Dabei stellt dieses Ausführungsbeispiel eine drei-stufige Verschiebung der Außenfläche des rechten Kettenstrebenkopfes dar. Dabei ist die erste Stufe als erstes Plateau ausgeführt, die zweite Stufe als zweites Plateau ausgeführt, das im Wesentlichen parallel zum ersten Plateau verläuft. Und die dritte Stufe ist als schräge Fläche ausgeführt, welche vom Verlauf her äquidistant der Kette auf dem größeren Kettenblatt folgt, und Freiraum die Kette bietet, wenn diese vom Kettenblatt abspringt.

Dabei können die Kettenstrebenköpfe mit den drei äußeren nach hinten hin ansteigenden Planarflächen folgendermaßen ausgeführt sind.

Gemäß einem weiteren Ausführungsbeispiel der Erfindung weist der gefederte Zweiradrahmen eine Leitung mit einer äußeren Oberfläche auf, wobei die Leitung durch die Öffnung in der Schwingenlageraufnahme geführt wird. Die äußere Oberfläche der Leitung wird im geführten Zustand in einem Abstand von einer Drehachse des Lagers von 0 mm bis 10 mm geführt.

Gemäß einem weiteren Ausführungsbeispiel der Erfindung ist ein Fahrrad angegeben, das zusätzlich das Schwingenlager aufweist. Ergänzend sei darauf hingewiesen, dass "umfassend" und "aufweisend" keine anderen Elemente oder Schritte ausschließen und "eine" oder "ein" keine Vielzahl ausschließen. Ferner sei darauf hingewiesen, dass Merkmale oder Schritte, die mit dem Verweis auf eines der obigen Ausführungsbeispiele beschrieben worden sind, auch in Kombination mit anderen Merkmalen oder Schritten anderer oben beschriebener Ausführungsbeispiele der Erfindung verwendet werden können. Bezugszeichen in den Ansprüchen sind nicht als Einschränkungen anzusehen. Im Folgenden werden mit Verweis auf die Figuren Ausführungsbeispiele der Erfindung beschrieben.

### KURZE BESCHREIBUNG DER FIGUREN

Fig. 1 zeigt eine schematische, dreidimensionale Darstellung eines gefederten Zweiradrahmens gemäß einem Ausführungsbeispiel der Erfindung.
Fig. 2 zeigt eine schematische, zweidimensionale Darstellung eines gefederten Zweiradrahmens gemäß einem Ausführungsbeispiel der Erfindung.
Fig. 3 zeigt eine schematische, zweidimensionale Darstellung eines Querschnitts durch das Schwingenlager eines gefederten Zweiradrahmens gemäß einem Ausführungsbeispiel der Erfindung.
Fig. 4 zeigt eine schematische, zweidimensionale Darstellung eines gefederten Zweiradrahmens gemäß einem Ausführungsbeispiel der Erfindung.

In den folgenden Figurenbeschreibungen werden für die gleichen oder ähnlichen Elemente die gleichen oder ähnlichen Bezugsziffern verwendet.

Die Darstellungen in den Figuren sind schematisch und nicht maßstäblich.

### DETAILLIERTE BESCHREIBUNG VON AUSFÜHRUNGSBEISPIELEN

Die Fig. 1 zeigt einen gefederten Zweiradrahmen 100 mit einem Vorderbau 101 und einer Schwinge 102, wobei der Vorderbau eine Schwingenlageraufnahme 103 aufweist. Die Schwinge 102 weist eine erste und eine zweite Kettenstrebe 104 und 105 auf. Dabei ist die erste und zweite Kettenstrebe jeweils mittels des Lagers 106 an der Schwingenlageraufnahme 103 beweglich befestigt. Die Schwingenlageraufnahme weist eine Aussparung 107 zur Bereitstellung eines Freiraums 108 für ein Hinterrad (nicht gezeigt) des gefederten Zweiradrahmens auf. Zwischen der ersten und der zweiten Kettenstrebe befindet sich ein Jochbein 107, welches Teil der Schwinge ist. Das Jochbein verläuft von der ersten zur zweiten Kettenstrebe unterhalb der Schwingenlageraufnahme 103. Im Ausführungsbeispiel der Fig. 1 ist auch ein erster Kettenstrebenkopf 101 der ersten Kettenstrebe und ein zweiter Kettenstrebenkopf 111 der zweiten Kettenstrebe gezeigt. Die Schwinge 102 ist mittels dieser Kettenstrebenköpfe an der Schwingenlageraufnahme 103 befestigt. Wie sich aus dieser Schrägansicht ergibt, sind der erste und zweite Kettenstrebenkopf jeweils als tiefgezogener Kettenstrebenkopf ausgeführt, die von der Drehachse 112 des Lagers 106 nach unten verlaufen. Dabei bezeichnet nach unten hier in Richtung Boden, auf welchem sich das Fahrrad dieses gefederten Zweiradrahmens befindet.

Weiterhin ist der Fig. 1 zu entnehmen, dass die Schwingenlageraufnahme 103 als unbeweglicher, einstückiger, nicht verschwenkbarer Teil des Vorderbaus ausgeführt ist. Ebenso ist innerhalb der Aussparung 107 der Schwingenlageraufnahme 103 eine Öffnung 113 zur Leitungsdurchführung angeordnet. Die Leitung 120 wird durch das Unterrohr 115 oder das Sitzrohr 114 bis zu der Öffnung 113 geführt, verläuft dann im Freiraum, der durch die Aussparung 107 in der Schwingenlageraufnahme bereitgestellt wird und tritt anschließend in die zweite Kettenstrebe 105 ein und wird durch diese in Richtung Ausfallende geführt. Wie sich der Fig. 1 entnehmen lässt, verläuft die Führung der Leitung 120 im Unterrohr 115 gerade. Die Öffnung 113 ist am Grund der Aussparung angeordnet. Der Grund der Aussparung 107 ist gegenüber der Drehachse des Lagers 112 in Richtung des Vorderrades und/oder in Richtung der Tretlagerachse des Zweiradrahmens 100 versetzt.

Wie der Fig. 1 weiterhin entnommen werden kann, ermöglicht die neue Rahmenkonstruktion der vorliegenden Erfindung die Verwendung größerer Hinterräder, ohne die Kettenstreben verlängern zu müssen. Durch die Kombination der Aussparung in der Schwingenlageraufnahme mit dem Jochbein, welches unterhalb der Schwingenlageraufnahme verläuft, und den tiefgezogenen Kettenstrebenköpfen der Kettenstreben kann somit ein großes Hinterrad in den Rahmen integriert werden, ohne die nachteilige Hinterbaulastigkeit mit schlechten Fahreigenschaften von verlängerten Kettenstreben in Kauf nehmen zu müssen.

Der Kettenstrebenkopf 110 weist bezüglich einer Symmetrieebene 323 (siehe Fig. 3) des gefederten Zweiradrahmens 100 mindestens eine erste, eine zweite und eine dritte äußere Planarfläche 118, 119, 120 auf. Die erste Planarfläche 118 hat einen Abstand d1 von der Symmetrieebene (siehe Figur 3, 323), die zweite Planarfläche 119 hat einen Abstand d2 von der Symmetrieebene und die dritte Planarfläche 120 hat einen Abstand d3 von der Symmetrieebene, wobei die Relation gilt, dass d1 < d2 < d3.

Damit wird jeweils ein Kettenstrebenkopf bereitgestellt, der von der Drehachse des Schwingenlagers in Richtung des Ausfallendes sich in zwei Stufen weiter nach außen, also weg von der Symmetrieebene, erstreckt. Dies erfolgt nicht kontinuierlich, sondern in zwei diskreten Schritten mittels der drei definierten äußeren Planarflächen 118, 119 und 120.

Fig. 2 zeigt ein weiteres Ausführungsbeispiel der vorliegenden Erfindung, in dem ein gefederter Zweiradrahmen 200 mit einem Vorderbau 201 und einer Schwinge 202 gezeigt ist. Die Schwingenlageraufnahme 203, die hier teilweise im Querschnitt dargestellt ist, weist innerhalb der Aussparung der Schwingenlageraufnahme eine Öffnung 213 auf, an welche eine Führungsvorrichtung 223 angeschlossen ist. Diese Führungsvorrichtung 223 stellt damit einen Kanal bereit, durch welchen die Leitung 220 durch den gefederten Zweiradrahmen hin zu der Öffnung 213 geführt wird. Dabei ist zu sehen, dass der Eintritt 202 der Leitung 220 in das Innere der zweiten Kettenstrebe 205 unterhalb der Drehachse 212 des Lagers erfolgt und der Eintritt 222 der Leitung 220 in das Innere der zweiten Kettenstrebe auch oberhalb des Jochbeins 209 erfolgt. In einem weiteren Ausführungsbeispiel gilt das ebenso für eine weitere Leitung, welche durch die Öffnung 213 geführt wird, dann jedoch in das Innere der ersten Kettenstrebe (hier nicht gezeigt) geführt wird. Mittels der Führung der Leitung 220 im Inneren 217 der zweiten Kettenstrebe 205 wird insgesamt ein geschützter und geführter Verlauf der Leitung im Wesentlichen innerhalb des Zweiradrahmens gewährleistet. Insgesamt wird die Leitung 220 damit von dem Oberrohr 215 in die Führungsvorrichtung 223 durch die Öffnung 208 hinein in die Öffnung 221 der zweiten Kettenstrebe 205 und durch das Innere 217 der Kettenstrebe hin zum Ausfallende der zweiten Kettenstrebe geführt. Mithilfe dieses erfindungsgemäßen Ausführungsbeispiels der Fig. 2 ist es möglich, eine Leitung an einem gefederten Zweiradrahmen derart zu verlegen, dass Relativbewegungen zwischen der Schwinge und dem Vorderbau weder Längungen der Leitung noch mechanischen Abrieb im Bereich der Leitungsführung verursachen.

Auch in dem Ausführungsbeispiel der Fig. 2 ist der Kettenstrebenkopf 211 tiefgezogen, da er sich von der Achse 212 des Lagers nach unten erstreckt, dann in einen gekrümmten Bereich mündet, der in einen waagerechten bzw. gerade verlaufenden Bereich der zweiten Kettenstrebe 205 mündet. Dies kann der Fig. 2 deutlich entnommen werden.

Gemäß einem weiteren spezifischen Ausführungsbeispiel ist in der Fig. 3 ein gefederter Zweiradrahmen 300 gezeigt. Dabei ist ein Querschnitt der Schwingenlageraufnahme 303 dargestellt, durch welchen der Verlauf der Aussparung 307 und dem damit bereitgestellten Freiraum 308 grafisch besserer Ausdruck verliehen werden kann. In diesem Ausführungsbeispiel sind am Grund 324 der Aussparung 307 zwei Öffnungen 313a und 313b angeordnet. Gemäß einem weiteren Ausführungsbeispiel können diese beiden Öffnungen mittels einer Trennwand voneinander getrennt sein. Die beiden Kettenstreben 304 und 305 sind ebenfalls im Querschnitt dargestellt. Die Drehachse 312 des Schwingenlagers verläuft in dieser Ansicht durch die Zentren der beiden Öffnungen 313a und 313b. Auch in diesem Ausführungsbeispiel können damit mindestens zwei oder auch mehr Leitungen gerichtet geführt werden und es kann sichergestellt werden, dass die Leitungen durch den Drehpunkt bzw. durch die Drehachse 312 des Schwingenlagers verlaufen oder einen minimalen Abstand von beispielsweise 0 bis 10 mm haben. Fig. 3 stellt auch die Symmetrieebene 323 dar, wobei der Fahrradrahmen im Wesentlichen symmetrisch zu dieser Symmetrieebene 323, neben kleineren unsymmetrischen Abweichungen, ausgeführt ist.

Gemäß einem weiteren Ausführungsbeispiel zeigt die Fig. 4 einen gefederten Zweiradrahmen 400. Der Zweiradrahmen weist einen Vorderbau 401 und eine Schwinge 402 sowie das zweiteilige Schwingenlager 406 auf. Die Schwingenlageraufnahme 403 ist unbeweglich, einstückig und nicht verschwenkbar als Teil des Hauptrahmens des Zweiradrahmens 400 ausgeführt. Das Tretlagergehäuse ist mit 425 dargestellt. Der tiefgezogene Kettenstrebenkopf 424 weist die aneinandergrenzenden ersten, zweiten und dritten Planarflächen 418, 419 und 420 auf. Dadurch sind an dem tiefgezogenen Kettenstrebenkopf ein erster Bereich definiert, der nach unten bzw. schräg nach unten verläuft und der in einen gekrümmten Bereich übergeht, welcher in einen anschließenden Bereich des geraden oder waagerechten Verlaufs übergeht. Mittels der drei Planarflächen 418, 419 und 420 kann ein Kettenstrebenprofil erzeugt werden, so dass die Distanz der ersten äußeren Planarfläche von der Symmetrieebene des Zweiradrahmens (siehe 323 in Fig. 3) einen geringeren Abstand aufweist als die zweite äußere Planarfläche 419. Ebenso weist die äußere Planarfläche 419 einen kleineren Abstand von der Symmetrieebene auf als die dritte äußere Planarfläche 420.

Dieses Ausführungsbeispiel 400 erlaubt insbesondere eine Optimierung bei der Verwendung von zwei Kettenblättern. Dabei stellt dieses Ausführungsbeispiel eine drei-stufige Verschiebung der Außenfläche des rechten Kettenstrebenkopfes dar. Dabei ist die erste Stufe als erstes Plateau 418 ausgeführt, die zweite Stufe als zweites Plateau 419 ausgeführt, das im Wesentlichen parallel zum ersten Plateau 418 verläuft. Und die dritte Stufe 420 ist als schräge Fläche ausgeführt, welche vom Verlauf her äquidistant der Kette auf dem größeren Kettenblatt folgt, und Freiraum die Kette bietet, wenn diese vom Kettenblatt abspringt.

## Patentansprüche

1. Fahrrad mit einem gefederten Zweiradrahmen (100),
wobei der gefederte Zweiradrahmen einen Vorderbau (101), ein Hinterrad und eine Schwinge (102) aufweist,
wobei der Vorderbau eine Schwingenlageraufnahme (103) aufweist, wobei die Schwinge eine erste und eine zweite Kettenstrebe (104, 105) aufweist,
wobei die erste und zweite Kettenstrebe jeweils mittels eines Lagers (106) an der Schwingenlageraufnahme beweglich befestigt sind,
wobei zwischen der ersten und der zweiten Kettenstrebe ein Jochbein (109) der Schwinge vorgesehen ist, und wobei das Jochbein (109) unterhalb der Schwingenlageraufnahme (103) von der ersten zur zweiten Kettenstrebe (104, 105) verläuft, **dadurch gekennzeichnet, dass**
die Schwingenlageraufnahme eine Aussparung (107) zur Bereitstellung eines Freiraums (108) für ein Hinterrad des gefederten Zweiradrahmens aufweist, wobei das Hinterrad des Fahrrades durch den bereitgestellten Freiraum hindurchtritt.

2. Fahrrad nach Anspruch 1,
wobei die erste Kettenstrebe (104) einen ersten Kettenstrebenkopf (110) und die zweite Kettenstrebe (105) einen zweiten Kettenstrebenkopf (111) aufweisen, an welchen die Schwinge (102) an der Schwingenlageraufnahme (103) befestigt ist, und
wobei der erste und der zweite Kettenstrebenkopf jeweils als tiefgezogener, von einer Drehachse (112) des Lagers (106) nach unten verlaufender Kettenstrebenkopf ausgeführt ist.

3. Fahrrad nach einem der Ansprüche 1 oder 2,
wobei die Schwingenlageraufnahme (103) als unbeweglicher, einstückiger, nicht verschwenkbarer Teil eines Hauptrahmens des Zweiradrahmens (100) ausgeführt ist.

4. Fahrrad nach einem der vorherigen Ansprüche,
wobei innerhalb der Aussparung (107) der Schwingenlageraufnahme (103) mindestens eine Öffnung (113) zur Leitungsdurchführung angeordnet ist.

5. Fahrrad nach Anspruch 4,
wobei innerhalb der Aussparung (107) der Schwingenlageraufnahme (103) eine erste und eine zweite Öffnung (313a, 313b) zur Leitungsdurchführung angeordnet sind, welche durch eine Trennwand voneinander getrennt sind, und
wobei innerhalb eines Sitzrohres (114) oder eines Unterrohres (115) des Vorderbaus (101) des gefederten Zweiradrahmens (100) eine erste und eine zweite Leitung geführt wird, und
wobei die erste Leitung durch die erste Öffnung und die zweite Leitung durch die zweite Öffnung in der Schwingenlageraufnahme geführt wird.

6. Fahrrad nach einem der Ansprüche 4 oder 5,
wobei die Führung in einem Unterrohr (315) des Zweiradrahmens (300) bis zur mindestens einen Öffnung (313a, 313b) gerade verläuft.

7. Fahrrad nach einem der Ansprüche 4 bis 6,
wobei die Öffnung (313a, 313b) am Grund (324) der Aussparung (307) angeordnet ist, und
wobei der Grund der Aussparung gegenüber der Drehachse (312) des Lagers (106) in Richtung eines Vorderrades und/oder in Richtung einer Tretlagerachse versetzt ist.

8. Fahrrad nach einem der Ansprüche 4 bis 7,
wobei durch die mindestens eine Öffnung (113) eine Leitung (120) geführt wird, und
wobei die Leitung von der Öffnung innerhalb der Aussparung (107) der Schwingenlageraufnahme (103) in ein Inneres (116, 117) der ersten oder zweiten Kettenstrebe (104, 105) verläuft.

9. Fahrrad nach Anspruch 8,
wobei ein Eintritt (222) der Leitung (220) in das Innere (116, 117) der ersten oder zweiten Kettenstrebe (104, 105) unterhalb der Drehachse (212) des Lagers (106) erfolgt, und
wobei der Eintritt (222) der Leitung (220) in das Innere der ersten oder zweiten Kettenstrebe oberhalb des Jochbeins (209) erfolgt.

10. Fahrrad nach einem der vorherigen Ansprüche,
wobei die erste Kettenstrebe (104) einen ersten Kettenstrebenkopf (110) und die zweite Kettenstrebe (105) einen zweiten Kettenstrebenkopf (111) aufweisen, an welchen die Schwinge (102) an der Schwingenlageraufnahme (103) befestigt ist, und
wobei jeweils der erste und der zweite Kettenstrebenkopf bezüglich einer Symmetrieebene (323) des gefederten Zweiradrahmens (100) mindestens eine erste, eine zweite und eine dritte äußere Planarfläche (118, 119, 120) aufweisen, und
wobei die erste äußere Planarfläche einen Abstand d1 von der Symmetrieebene aufweist,
wobei die zweite äußere Planarfläche einen Abstand d2 von der Symmetrieebene aufweist,
wobei die dritte äußere Planarfläche einen Abstand d3 von der Symmetrieebene aufweist, und
wobei die Relation gilt, dass d1 < d2 < d3.

11. Fahrrad nach einem der Ansprüche 4 bis 10,
wobei die Leitung (120) eine äußere Oberfläche aufweist; und
wobei die äußere Oberfläche der Leitung im geführten Zustand einen Abstand von einer Drehachse (112) des Lagers (106) besitzt, der zwischen 0 mm und 10 mm beträgt.

12. Fahrrad nach einem der vorherigen Ansprüche, weiterhin aufweisend das Lager (106).

## Claims

1. Bicycle with a suspended two-wheeled vehicle frame (100),
wherein the suspended two-wheeled vehicle frame comprises a front part (101), a rear wheel and a swing arm (102),
wherein the front part comprises a swing arm bearing seat (103), wherein the swing arm comprises a first and a second chainstay (104, 105),
wherein the first and second chainstays are each movably mounted to the swing arm bearing seat by means of a bearing (106),
wherein a yoke (109) of the swing arm is provided between the first and second chainstays, and wherein the yoke (109) runs below the swing arm bearing seat (103) from the first chainstay (104) to the second chainstay (105),
**characterized in**
**that** the swing arm bearing seat comprises a recess (107) for providing a clearance (108) for a rear wheel of the suspended two-wheeled vehicle frame,
wherein the rear wheel of the bicycle penetrates the provided clearance.

2. Bicycle according to claim 1,
wherein the first chainstay (104) comprises a first chainstay head (110) and the second chainstay (105) comprises a second chainstay head (111), at which heads the swing arm (102) is mounted to the swing arm bearing seat (103), and
wherein the first and the second chainstay heads are each formed as deep-drawn chainstay head that run downwards from an axis of rotation (112) of the bearing (106).

3. Bicycle according to one of claims 1 or 2,
wherein the swing arm bearing seat (103) is performed as an immovable, single-piece, non-pivotable part of a main frame of the vehicle frame (100).

4. Bicycle according to one of the preceding claims,
wherein at least one opening (113) for line feedthrough is arranged inside the recess (107) of the swing arm bearing seat (103).

5. Bicycle according to claim 4,
wherein a first and second opening (313a, 313b) for line feedthrough is arranged inside the recess (107) of the swing arm bearing seat (103), which openings are separated by means of a separating wall, and
wherein a first and a second line are guided inside a seat tube (114) or a down tube (115) of the front part (101) of the suspended two-wheeled vehicle frame (100), and
wherein the first line is guided through the first opening and the second line is guided through the second opening in the swing arm bearing seat.

6. Bicycle according to one of claims 4 or 5,
wherein the guiding runs straight in a down tube (315) of the two-wheeled vehicle frame (300) to at least one opening (313a, 313b).

7. Bicycle according to one of claims 4 to 6,
wherein the opening (313a, 313b) is arranged at the base (324) of the recess (307), and
wherein the base of the recess is offset relative to the axis of rotation (312) of the bearing (106) towards a front wheel and/or towards a bottom bracket axle.

8. Bicycle according to one of claims 4 to 7,
wherein a line (120) is guided through the at least one opening (113), and
wherein the line runs from the opening inside the recess (107) of the swing arm bearing seat (103) into the interior (116, 117) of the first or second chainstay (104, 105).

9. Bicycle according to claim 8,
wherein an entry (222) of the line (220) into the interior (116, 117) of the first or second chainstay (104, 105) occurs below the axis of rotation (212) of the bearing (106), and
wherein the entry (222) of the line (220) into the interior of the first or second chainstay occurs above the yoke (209).

10. Bicycle according to one the preceding claims,
wherein the first chainstay (104) comprises a first chainstay head (110) and the second chainstay (105) comprises a second chainstay head (111), at which heads the swing arm (102) is mounted to the swing arm bearing seat (103), and
wherein the first and the second chainstay heads each comprise, in relation to a plane of symmetry (323) of the suspended two-wheeled vehicle frame (100), at least a first, a second and a third outer planar surface (118, 119, 120), and
wherein the first outer planar surface is at a distance d1 from the plane of symmetry,
wherein the second outer planar surface is at a distance d2 from the plane of symmetry,
wherein the third outer planar surface is at a distance d3 from the plane of symmetry, and
wherein the relationship d1 < d2 < d3 applies.

11. Bicycle according to one of claims 4 to 10,
wherein the line (120) comprises an outer surface; and
wherein, in a guided condition, the outer surface of the line is at a distance of 0 mm between 10 mm from an axis of rotation (112) of the bearing (106).

12. Bicycle according to one of the preceding claims, further comprising the bearing (106).

## Revendications

1. Bicyclette comprenant un cadre de bicyclette à suspension (100),
le cadre de bicyclette à suspension présentant une structure avant (101), une roue arrière et une bielle (102),
la structure avant présentant un logement de palier de bielle (103),
la bielle présentant une première et une deuxième base (104, 105),
la première et la deuxième base étant chacune fixées de manière mobile sur le logement de palier de bielle au moyen d'un palier (106),
un renfort transversal (109) de la bielle étant prévu entre la première et la deuxième base, et le renfort transversal (109) s'étendant en dessous du logement de palier de bielle (103) de la première à la deuxième base (104, 105),
**caractérisée en ce que** le logement de palier de bielle présente un évidement (107) pour fournir un espace libre (108) pour une roue arrière du cadre de bicyclette à suspension, la roue arrière de la bicyclette passant à travers l'espace libre fourni.

2. Bicyclette selon la revendication 1,
dans laquelle la première base (104) présente une première tête de base (110) et la deuxième base (105) présente une deuxième tête de base (111) au niveau desquelles la bielle (102) est fixée au logement de palier de bielle (103), et
la première et la deuxième tête de base sont à chaque fois réalisées sous forme de tête de base emboutie profond, s'étendant vers le bas depuis un axe de rotation (112) du palier (106).

3. Bicyclette selon la revendication 1 ou 2,
dans laquelle le logement de palier de bielle (103) est réalisé sous forme de pièce immobile, d'une seule pièce, non pivotante, d'un cadre principal du cadre de bicyclette (100).

4. Bicyclette selon l'une quelconque des revendications précédentes, dans laquelle, à l'intérieur de l'évidement (107) du logement de palier de bielle (103), est disposée au moins une ouverture (113) pour un passage de câble.

5. Bicyclette selon la revendication 4,
dans laquelle, à l'intérieur de l'évidement (107) du logement de palier de bielle (103), sont disposées une première et une deuxième ouverture (313a, 313b) pour le passage de câbles, lesquelles sont séparées l'une de l'autre par une paroi de séparation, et
dans laquelle, à l'intérieur d'un tube de selle (114) ou d'un tube de pédalier (115) de la structure avant (101) de la bicyclette à suspension (100), sont guidés un premier et un deuxième câble, et
dans laquelle le premier câble est guidé à travers la première ouverture et le deuxième câble est guidé à travers la deuxième ouverture dans le logement de palier de bielle.

6. Bicyclette selon l'une quelconque des revendications 4 et 5,
dans laquelle le guidage s'étend en ligne droite dans un tube de pédalier (315) du cadre de bicyclette (300) jusqu'à au moins une ouverture (313a, 313b).

7. Bicyclette selon l'une quelconque des revendications 4 à 6,
dans laquelle l'ouverture (313a, 313b) est disposée au fond (324) de l'évidement (307), et
dans laquelle le fond de l'évidement est décalé par rapport à l'axe de rotation (312) du palier (106) dans la direction d'une roue avant et/ou dans la direction d'un axe de pédalier.

8. Bicyclette selon l'une quelconque des revendications 4 à 7,
dans laquelle un câble (120) est guidé à travers l'au moins une ouverture (113), et
dans laquelle le câble s'étend depuis l'ouverture à l'intérieur de l'évidement (107) du logement de palier de bielle (103) dans un intérieur (116, 117) de la première ou de la deuxième base (104, 105).

9. Bicyclette selon la revendication 8,
dans laquelle une entrée (222) du câble (220) dans l'intérieur (116, 117) de la première ou de la deuxième base (104, 105) s'effectue en dessous de l'axe de rotation (212) du palier (106), et
dans laquelle l'entrée (222) du câble (220) dans l'intérieur de la première ou de la deuxième base s'effectue au-dessus du renfort transversal (209).

10. Bicyclette selon l'une quelconque des revendications précédentes, dans laquelle la première base (104) présente une première tête de base (110) et la deuxième base (105) présente une deuxième tête de base (111) au niveau desquelles la bielle (102) est fixée au logement de palier de bielle (103), et dans laquelle à chaque fois la première et la deuxième tête de base présentent, par rapport à un plan de symétrie (323) du cadre de bicyclette à suspension (100), au moins une première, une deuxième et une troisième surface plane extérieure (118, 119, 120), et
dans laquelle la première surface plane extérieure présente une distance d1 au plan de symétrie,
dans laquelle la deuxième surface plane extérieure présente une distance d2 au plan de symétrie,
dans laquelle la troisième surface plane extérieure présente une distance d3 au plan de symétrie, et
dans laquelle on a la relation d1 < d2 < d3.

11. Bicyclette selon l'une quelconque des revendications 4 à 10,
dans laquelle le câble (120) présente une surface extérieure ; et
dans laquelle à la surface extérieure du câble, dans l'état guidé, possède une distance à un axe de rotation (112) du palier (106) qui est comprise entre 0 mm et 10 mm.

12. Bicyclette selon l'une quelconque des revendications précédentes, présentant en outre le palier (106).
